# DEMANDE DE BREVET EUROPEEN

(11) **EP 4 530 490 A1**
(43) Date de publication de la demande: **02.04.2025**
(21) Numéro de dépôt: 24187609.3
(22) Date de dépôt: 10.07.2024
(51) Int. Cl.: F16D 11/14, F16D 41/00

(54) **SYSTÈME AYANT UN DISPOSITIF DE LIAISON MÉCANIQUE À DEUX CHEMINS DE TRANSMISSION DE COUPLE MÉCANIQUE**

(30) Priorité: 29.09.2023 FR 2310437
(71) Demandeur: Airbus Helicopters, 13725 Marignane Cedex (FR)
(72) Inventeur: LAPEYRE, Jean-Victor, 13680 LANÇON-PROVENCE (FR); COSSETTI, Luca, 13980 ALLEINS (FR)
(74) Mandataire: GPI Brevets

(57) **Abrégé**

La présente invention concerne un système comprenant une dispositif de liaison (20) ayant un premier arbre (25) et un deuxième arbre (30), le dispositif de liaison (20) comprenant une roue libre (35) interposée entre le premier arbre (25) et le deuxième arbre (30) pouvant uniquement transmettre un couple moteur du premier arbre (25) vers le deuxième arbre (30) lors d'un mode moteur. Le dispositif de liaison (20) comprend un coupleur (40), le coupleur (40) étant muni d'une section fusible (45), le dispositif de liaison (20) comprenant une liaison à crabot (50) pouvant uniquement transmettre un couple moteur du coupleur (40) vers le premier arbre (25) lors d'un mode générateur électrique.

## Description

La présente invention concerne un système ayant un dispositif de liaison mécanique à deux chemins de transmission de couple mécanique. Par exemple, un véhicule peut être muni d'un dispositif mécanique connecté à une installation motrice hybride, cette installation motrice hybride ayant au moins une machine électrique connectée au dispositif mécanique par un tel dispositif de liaison mécanique.

En particulier, le dispositif mécanique peut comprendre au moins un rotor mis en mouvement par une boîte de transmission de puissance pour participer à la sustentation et/ou à la propulsion de cet aéronef. A titre illustratif, l'aéronef peut comprendre une boîte de transmission de puissance mettant en mouvement au moins un rotor principal pour assurer au moins partiellement sa sustentation voire sa propulsion, voire un rotor participant au contrôle du mouvement en lacet.

Une installation motrice hybride thermique/électrique peut être connectée au dispositif mécanique pour le mettre en mouvement, et en particulier peut être connectée à la boîte de transmission de puissance selon l'exemple précité.

Cette installation motrice hybride comprend au moins un moteur thermique. L'expression « moteur thermique » désigne les turbomoteurs ou encore l'ensemble des moteurs à combustion interne, notamment à pistons, pouvant être utilisés dans une telle installation motrice. L'expression « moteur thermique » est à opposer à l'expression « moteur électrique » qualifiant les moteurs consommant uniquement de l'énergie électrique.

De plus, l'installation motrice hybride comprend au moins une machine électrique. Une telle machine électrique peut fonctionner dans un mode moteur électrique en transformant une énergie électrique en une énergie mécanique pour participer à la mise en mouvement de la boîte de transmission de puissance, mais aussi dans un mode générateur électrique en transformant une énergie mécanique prélevée en une énergie électrique pouvant être transmise à un réseau électrique de l'aéronef.

Le document FR 3106570 décrit un aéronef à voilure tournante comportant au moins un moteur thermique et un moteur électrique de secours.

Par ailleurs, la machine électrique peut être pilotée, en fonction de la phase de vol, soit pour fonctionner dans le mode moteur électrique soit dans le mode générateur électrique. La puissance mécanique transmise au dispositif mécanique dans le mode moteur électrique peut être différente de la puissance mécanique pouvant être prélevée durant l'application du mode générateur électrique.

En outre, la machine électrique peut être sujette à un risque de blocage interne. Pour résoudre ce problème, la machine électrique peut être connectée au dispositif mécanique par un dispositif de liaison mécanique pouvant désolidariser le dispositif mécanique de la machine électrique. Ce dispositif de liaison mécanique peut, par exemple, cinématiquement désolidariser la machine électrique du dispositif mécanique en cas de blocage.

Le document EP 3693627 B1 n'appartient pas au domaine technique de l'invention et n'apporte pas de solution au problème précité. En effet, le document EP 3693627 B1 vise un dispositif d'embrayage sélectionnable positionné entre un système d'entraînement principal et un système d'entraînement secondaire, le système d'entraînement principal ayant des boîtes de transmission de puissance et un moteur principal, tel un turbomoteur. Le système d'entraînement secondaire a un moteur secondaire, tel un turbomoteur. Le dispositif d'embrayage sélectionnable comporte un pignon d'entrée solidaire d'une bague externe. Une roue libre est interposée entre la bague externe et une bague interne solidaire en rotation d'un pignon de sortie. Le dispositif d'embrayage sélectionnable comporte un ensemble de dérivation pour solidariser en rotation la bague externe et la bague interne dans un mode accouplé, et désolidariser en rotation la bague externe et la bague interne dans un mode désaccouplé. L'ensemble de dérivation comporte un organe comprenant des cannelures en prise sur des cannelures de la bague interne. L'ensemble de dérivation comporte aussi un actionneur pour lier sur requête des cannelures dudit organe avec des cannelures de la bague externe. Dans le mode découplé, le dispositif d'embrayage sélectionnable fonctionne dans un mode de transfert de couple unidirectionnel du pignon d'entrée vers le pignon de sortie. Dans un mode accouplé, le dispositif d'embrayage sélectionnable fonctionne dans un mode de transfert de couple bidirectionnel entre le pignon d'entrée et le pignon de sortie via l'ensemble de dérivation.

Le document FR3122407 divulgue quant à lui un système de transmission d'une part d'un couple moteur d'un arbre primaire d'une machine électrique fonctionnant en mode moteur vers un arbre secondaire, et alternativement d'autre part d'un autre couple moteur de l'arbre secondaire vers l'arbre primaire de la machine électrique fonctionnant en mode générateur. Ce système comporte deux roues libres agencées en opposition de phase.

Le document DE 10 2015 214266 concerne une chaîne de transmission mécanique pour véhicule automobile pour l'entraînement d'une chaîne de transmission à l'aide d'un moteur thermique et d'un moteur électrique. Un dispositif de transmission de couple relie le moteur thermique et un arbre de transmission de la chaîne de transmission, le moteur électrique étant relié à cet arbre de transmission par un dispositif d'entraînement dédié, par exemple à courroie. Un volant bi-masse est intercalé entre le moteur thermique et le dispositif de transmission de couple. Un embrayage de démarrage est intercalé entre d'une part le dispositif de transmission de couple et le moteur électrique et d'autre part la chaîne de transmission. Le dispositif de transmission de couple comprend un embrayage de séparation muni de deux éléments d'accouplement qui peuvent être reliés entre eux par une liaison positive et une roue libre.

Le document US 9 447 734 divulgue quant à lui un aéronef muni d'au moins un rotor entraîné par une boîte de transmission de puissance, d'au moins un moteur thermique, et d'au moins une machine électrique fonctionnant en mode « moteur électrique » et en mode « générateur électrique ». Chaque machine électrique est reliée mécaniquement d'une part à la boîte de transmission de puissance par un premier moyen de liaison et d'autre part à un générateur de gaz d'un moteur thermique par un deuxième moyen de liaison. La machine électrique peut être relié mécaniquement par un même arbre à une entrée dédiée de la boîte de transmission de puissance via le premier moyen de liaison, et à un générateur de gaz via le deuxième moyen de liaison. Alternativement, la machine électrique peut être interposée entre une turbine libre d'un moteur thermique et la boîte de transmission de puissance. Le premier moyen de liaison peut comporter un embrayage ou une roue libre blocable.

Le document DE 10 2022 209300 décrit un système d'entraînement pour un véhicule électrique comportant deux vitesses et un embrayage à crabots ayant une fonction roue libre. L' embrayage à crabots comporte un élément interne dont la face d'extrémité est pourvue de griffes de traction, et un élément externe qui entoure radialement l'élément interne au moins en partie et est pourvu de griffes de poussée sur sa face d'extrémité. Les griffes de traction et les griffes de poussée ont des structures de coin inclinées de manière opposée, et les éléments interne et externe sont mobiles axialement avec leurs griffes respectives, vers un élément d'accouplement ayant une couronne dentée. L'élément interne transmet le couple dans un premier sens, tandis que l'élément externe transmet le couple dans un second sens opposé. Si les deux éléments sont insérés en même temps, le couple peut être transmis dans les deux sens, comme c'est le cas avec un embrayage à griffes classique.

Le document US 2022/136594 décrit un groupe motopropulseur pour automobile comprenant un ou plusieurs moteurs électriques ainsi qu'un embrayage unidirectionnel monté de manière fixe sur un premier arbre rotatif, un embrayage à crabots monté coulissant sur le premier arbre rotatif et adapté pour tourner avec le premier arbre rotatif, une bague d'embrayage positionné entre l'embrayage unidirectionnel et l'embrayage à crabots, et un second arbre rotatif en prise rotatif avec la bague d'embrayage. La bague d'embrayage est conçue pour transférer le mouvement de rotation du deuxième arbre rotatif à travers l'embrayage unidirectionnel et l'embrayage à crabots vers le premier arbre rotatif.

La présente invention a alors pour objet de proposer un dispositif de liaison mécanique innovant visant à limiter les risques de blocage du dispositif mécanique en cas de blocage de la machine électrique et à limiter les risques d'incendie en cas de court-circuit de la machine électrique.

L'invention vise ainsi un système de transmission muni d'un dispositif mécanique connecté à une installation motrice, ladite installation motrice comprenant une machine électrique pouvant fonctionner dans un mode moteur pour mettre en mouvement le dispositif mécanique et dans un mode générateur électrique en étant mise en mouvement par le dispositif mécanique, la machine électrique étant connectée cinématiquement au dispositif mécanique par un dispositif de liaison bidirectionnel, le dispositif de liaison comprenant un premier arbre relié cinématiquement à la machine électrique et un deuxième arbre relié cinématiquement au dispositif mécanique, le deuxième arbre étant mobile en rotation autour d'un axe de rotation selon un sens de rotation, le dispositif de liaison comprenant une roue libre interposée entre le premier arbre et le deuxième arbre pour uniquement transmettre un couple moteur du premier arbre vers le deuxième arbre lors du mode moteur .

Ce dispositif de liaison bidirectionnel comprend un coupleur, le coupleur étant muni d'une section fusible, le coupleur étant solidaire du deuxième arbre en rotation autour dudit axe de rotation, le dispositif de liaison comprenant une liaison à crabot pouvant uniquement transmettre un couple moteur du coupleur vers le premier arbre lors du mode générateur électrique.

Le couple moteur transmis par la liaison à crabot durant le mode générateur électrique peut être qualifié de couple générateur pour être distingué du couple moteur transmis par la roue libre lors du mode moteur.

La liaison à crabot et la roue libre peuvent ainsi permettre d'obtenir deux chemins de transmission d'un couple mécanique différents lors de deux modes de fonctionnement différents.

Durant le mode moteur, le premier arbre est mis en mouvement, par la machine électrique. Le dispositif de liaison transmet un couple moteur du premier arbre vers le deuxième arbre via la roue libre en raison du dimensionnement de la liaison à crabot. La liaison à crabot est dans ce cas inopérante. Par suite, un blocage de la machine électrique n'entraîne pas un blocage du dispositif mécanique en raison de la roue libre et de la section fusible. Si la machine électrique se bloque, la roue libre se désynchronise et provoque un changement de transmission des efforts pour solliciter le fusible. En l'absence d'action, la section fusible va éventuellement rompre et désolidariser la machine électrique du dispositif mécanique.

Durant le mode générateur électrique, le deuxième arbre est mis en mouvement par le dispositif mécanique. Le dispositif de liaison transmet un couple moteur du deuxième arbre vers le premier arbre via la liaison à crabot. La roue libre est alors désynchronisée. En cas de blocage de la machine électrique, la section fusible peut rompre afin de ne pas entraver le fonctionnement du dispositif mécanique.

Cette séparation des chemins de transmission d'un couple mécanique permet d'agencer la section fusible au sein du coupleur. En effet, la séparation des chemins de transmission d'un couple mécanique permet de dimensionner précisément et aisément la section fusible, en particulier dans le cas où la puissance transmise par le dispositif de liaison durant le mode générateur électrique est inférieure à la puissance transmise dans le dispositif de liaison durant le mode moteur. A titre illustratif, le dispositif de liaison peut transmettre une puissance mécanique de l'ordre de 250 à 300 Kilowatts durant le mode moteur, et de l'ordre de 30 à 50 Kilowatts durant le mode générateur électrique.

Un tel dispositif de liaison peut en outre être compact, et/ou relativement léger, et/ou peut être agencé relativement facilement au sein d'une architecture existante.

Le système de transmission peut comprendre, par exemple, une ou plusieurs des caractéristiques qui suivent, prises seules ou en combinaison.

Ainsi, le coupleur peut comprendre un arbre intermédiaire muni de ladite section fusible et solidaire du deuxième arbre en rotation autour de l'axe de rotation, ledit arbre intermédiaire étant relié au premier arbre par la liaison à crabot ; la liaison à crabot présentant au moins un jeu non nul en rotation autour de l'axe de rotation selon le sens de rotation.

Ce jeu permet d'empêcher un entraînement de l'arbre intermédiaire par le premier arbre durant le mode moteur, pour séparer les chemins de transmission de puissance dans le dispositif de liaison.

Selon une possibilité compatible avec les précédentes, la liaison à crabot peut comporter plusieurs premières dents qui sont solidaires du premier arbre en rotation autour de l'axe de rotation et plusieurs deuxièmes dents qui sont solidaires de l'arbre intermédiaire en rotation autour de l'axe de rotation, chaque deuxième dent étant agencée sur un arc de cercle centré sur l'axe de rotation entre une première dent amont et une première dent aval et étant séparée de la première dent amont par un dit jeu, la première dent amont étant en amont de la première dent aval au regard d'un observateur lors d'une rotation selon le sens de rotation autour de l'axe de rotation du premier arbre.

Par exemple, un tel jeu peut être défini angulairement par un angle compris entre 45° et 60°.

Le coupleur est ainsi simple et compact.

Selon une possibilité compatible avec les précédentes, ledit arbre intermédiaire peut comporter des premières cannelures engrenant des deuxièmes cannelures du deuxième arbre.

Selon une possibilité compatible avec les précédentes, le dispositif de liaison peut comporter un système de rappel élastique interposé entre l'arbre intermédiaire et le deuxième arbre, le système de rappel élastique poussant le coupleur dans une position de couplage prédéterminée permettant à la liaison à crabot de transmettre un couple moteur uniquement du coupleur vers le premier arbre.

Par exemple, le système de rappel tend à mettre en contact certaines premières dents et deuxièmes dents.

Selon une possibilité compatible avec les précédentes, ledit dispositif de liaison peut comporter un actionneur configuré pour déplacer le coupleur en translation d'une position de couplage prédéterminée permettant à la liaison à crabot de transmettre un couple moteur du coupleur vers le premier arbre à une position de découplage prédéterminée inhibant la liaison à crabot.

Un tel actionneur peut être un actionneur hydraulique, pneumatique, ou encore électrique par exemple. Un tel actionneur peut, par exemple, prendre la forme d'un vérin. L'actionneur permet d'interdire une transmission d'un couple moteur du deuxième arbre vers le premier arbre par sécurité, et notamment en présence d'un court-circuit dans la machine électrique durant le mode générateur électrique. Un tel actionneur peut aussi être utilisé pour vérifier le fonctionnement du dispositif de liaison durant un test avant utilisation.

L'actionneur peut être piloté par un contrôleur, pour par exemple déplacer le coupleur dans la position de découplage en cas de blocage ou de court-circuit de la machine électrique. A cet effet, le système peut comprendre au moins un senseur permettant de détecter un tel événement, tel qu'un capteur de courant et/ou un senseur de vitesse de rotation par exemple.

Selon une possibilité compatible avec les précédentes, l'installation motrice peut comporter au moins un moteur thermique relié cinématiquement au dispositif mécanique.

L'invention vise aussi un aéronef comportant un tel système de transmission.

Par exemple, le dispositif mécanique comporte une boîte de transmission de puissance, la boite de transmission de puissance mettant en mouvement au moins un rotor de sustentation et/ou de propulsion.

L'invention et ses avantages apparaîtront avec plus de détails dans le cadre de la description qui suit avec des exemples donnés à titre illustratif en référence aux figures annexées qui représentent :
la figure 1, un schéma présentant un dispositif de liaison selon l'invention muni d'un actionneur,
la figure 2, une vue en trois dimensions présentant la liaison à crabot de la figure 1,
la figure 3, un schéma présentant un dispositif de liaison selon l'invention agencé par exemple au sein d'un système de transmission, par exemple disposé au sein d'un aéronef,
la figure 4, un schéma présentant un dispositif de liaison selon l'invention muni d'un actionneur dans une position de couplage, et
la figure 5, un schéma présentant un dispositif de liaison selon l'invention muni d'un actionneur dans une position de découplage.

Les éléments présents dans plusieurs figures distinctes sont affectés d'une seule et même référence.

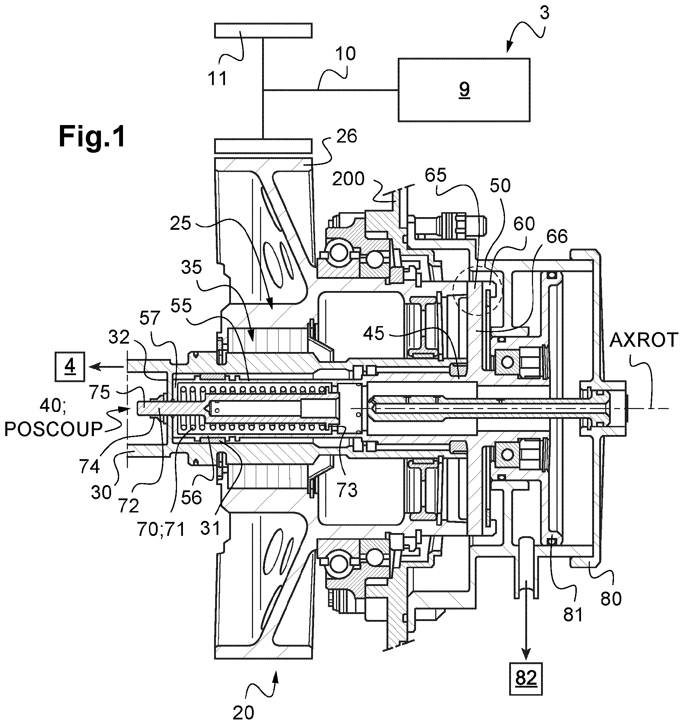

La figure 1 présente un dispositif de liaison 20 bidirectionnel. Ce dispositif de liaison 20 comprend un premier arbre 25 et un deuxième arbre 30 mobiles en rotation autour d'un même axe de rotation AXROT. Le terme « arbre » désigne un organe mécanique transmettant une puissance sous forme d'un couple et d'un mouvement de rotation, cet organe pouvant comprendre un ou plusieurs composants.

Le dispositif de liaison 20 peut être agencé au sein de tout système nécessitant une transmission de puissance bidirectionnelle entre deux ensembles.

Selon l'exemple, le premier arbre 25 peut être cinématiquement relié à une machine électrique 9 d'un système de transmission 3.

Par exemple, le premier arbre 25 peut ainsi être solidaire en rotation autour de l'axe de rotation AXROT d'un premier pignon 26 relié par une chaine mécanique à la machine électrique 9. Selon la possibilité illustrée sur la figure 1, la machine électrique 9 comporte un arbre de puissance 10 solidaire d'un pignon d'entrée/sortie 11 en prise avec le premier pignon 26.

Selon un autre aspect, le premier arbre 25 peut être porté par une structure 200.

Une telle machine électrique 9 est configurée pour fonctionner dans un mode moteur MODMOT pour mettre en mouvement le premier arbre 25 et dans un mode générateur électrique MODGEN en étant mise en mouvement par le premier arbre 25.

Par exemple, la machine électrique 9 est pilotée de manière usuelle par un calculateur ou encore une interface homme-machine. Le système de transmission peut comprendre au moins un senseur émettant un signal porteur d'une information relative au fonctionnement de la machine électrique 9. Par exemple, le système comporte un senseur de courant mesurant un courant électrique dans la machine électrique 9, un senseur de vitesse mesurant une vitesse de rotation d'un organe interne de la machine électrique 9, ou autres.

Par ailleurs, le deuxième arbre 30 peut être relié/connecté cinématiquement à un dispositif mécanique 4 du système de transmission 3 par des moyens usuels.

Selon un autre aspect, le dispositif de liaison 20 est muni d'une roue libre 35 interposée entre le premier arbre 25 et le deuxième arbre 30. La roue libre 35 est configurée pour transmettre un couple moteur uniquement du premier arbre 25 vers le deuxième arbre 30 durant le mode moteur, lors d'une rotation du premier arbre, selon un sens dit « sens de rotation », autour de l'axe de rotation AXROT. La roue libre est alors synchronisée. Durant le mode moteur, le premier arbre 25 représente ainsi un arbre menant mettant en rotation, via la roue libre 35, le deuxième arbre 30 qui forme un arbre mené.

Une telle roue libre 35 peut être une roue libre usuelle, à rampes ou cliquets par exemple. A titre illustratif, la roue libre 35 peut comprendre une bague externe munie de rampes et solidaire en rotation autour de l'axe de rotation AXROT du premier arbre 25, une bague interne solidaire en rotation autour de l'axe de rotation AXROT du deuxième arbre 30, et des organes roulants disposés entre la bague externe et la bague interne.

Dès lors, lorsque la roue libre 35 est synchronisée, le premier arbre 25 met en rotation autour de l'axe de rotation AXROT le deuxième arbre 30 selon le sens de rotation.

Par contre, si le deuxième arbre 30 tourne plus vite que le premier arbre 25 selon le sens de rotation, la roue libre 35 est désynchronisée.

Pour mettre en rotation, autour de l'axe de rotation AXROT et toujours selon le sens de rotation, le premier arbre 25 avec le deuxième arbre 30 durant le mode générateur électrique, le dispositif de liaison 20 comporte alors un coupleur 40. Le terme « coupleur » désigne un dispositif configuré pour transmettre un couple moteur uniquement du deuxième arbre 30 vers le premier arbre 25 durant le mode générateur électrique, contrairement à la roue libre 35.

A cet effet, le dispositif de liaison 20 possède une liaison à crabot 50 configurée pour uniquement transmettre un couple moteur du coupleur 40 vers le premier arbre 25 durant le mode générateur électrique.

Par ailleurs, le coupleur est muni d'une section fusible 45 pour désolidariser le premier arbre 25 du deuxième arbre 30, en cas de blocage de ce premier arbre 25.

Selon une possibilité, le coupleur 40 possède un arbre intermédiaire 55 muni de la section fusible 45. La section fusible 45 est obtenue en diminuant localement l'épaisseur de l'arbre intermédiaire 55 par exemple.

Cet arbre intermédiaire 55 peut être solidaire en rotation autour de l'axe de rotation AXROT du deuxième arbre 30. Selon l'exemple illustré, l'arbre intermédiaire 55 comporte des premières cannelures 56 en prises avec des deuxièmes cannelures 31 du deuxième arbre 30.

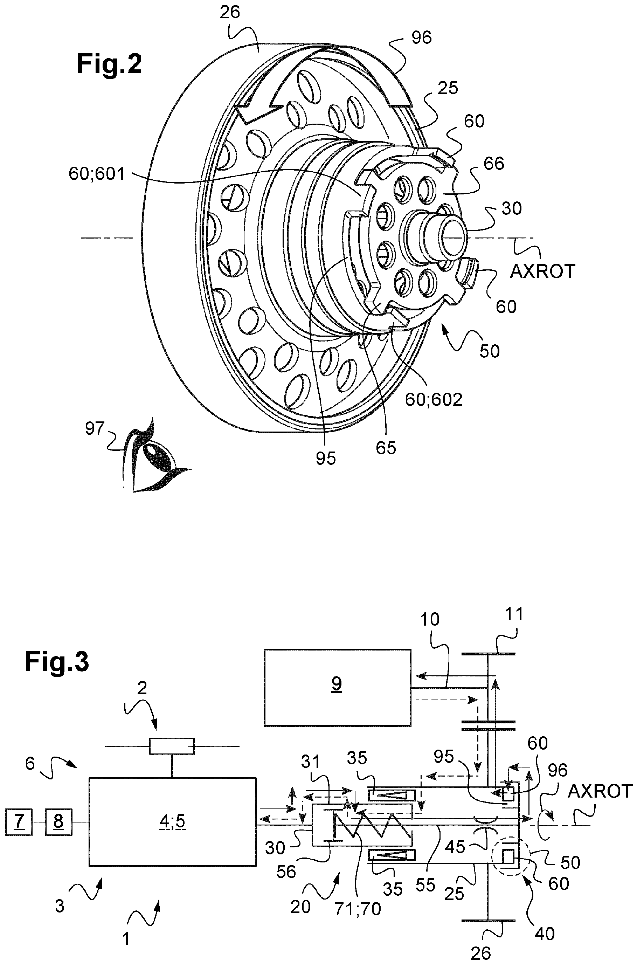

Par ailleurs, la liaison à crabot 50 a pour fonction de solidariser l'arbre intermédiaire 55 et le premier arbre 25, en rotation autour de l'axe de rotation AXROT, uniquement durant le mode générateur électrique et hors cas de panne. En référence à la figure 2, la liaison à crabot 50 possède au moins un jeu 95 fonctionnel non nul, en rotation autour de l'axe de rotation AXROT selon un sens de rotation 96, pour ne pas pouvoir solidariser en rotation le premier arbre 25 et le deuxième arbre 30 lors du mode moteur, du moins en l'absence de dysfonctionnement.

En particulier, la liaison à crabot 50 comporte plusieurs premières dents 60 solidaires du premier arbre 25 en rotation autour de l'axe de rotation AXROT. Les premières dents peuvent être disposées sur un cercle centré sur l'axe de rotation AXROT, par exemple de manière équirépartie. Chaque première dent 60 peut s'étendre à partir d'une extrémité du premier arbre 25 parallèlement à l'axe de rotation AXROT.

La liaison à crabot 50 comporte aussi plusieurs deuxièmes dents 65 solidaires de l'arbre intermédiaire 55 en rotation autour de l'axe de rotation AXROT. Les deuxièmes dents 65 peuvent être disposées sur ledit cercle centré sur l'axe de rotation AXROT, par exemple de manière équirépartie. Chaque deuxième dent 65 peut s'étendre, à partir de l'arbre intermédiaire 55 ou d'un disque 66 solidaire de l'arbre intermédiaire 55, radialement par rapport à l'axe de rotation AXROT.

Chaque deuxième dent 65 est en outre agencée sur un arc de cercle centré sur l'axe de rotation AXROT entre une première dent amont 601 et une première dent aval 602. Les expressions « dent amont » et « dent aval » sont à considérer aux yeux d'un observateur 97 lors d'une rotation autour de l'axe de rotation AXROT du premier arbre 25 selon le sens de rotation 96.

Chaque deuxième dent 65 est alors séparée de la première dent amont 601 correspondante par un jeu 95 suffisant pour éviter un engrènement de la deuxième dent 65 par la première dent amont 601 associée durant le mode moteur.

Par ailleurs et en référence à nouveau à la figure 1, le dispositif de liaison 20 peut comporter un système de rappel élastique 70 interposé entre l'arbre intermédiaire 55 et le deuxième arbre 30 pour le cas échéant positionner les premières dents 60 et les deuxièmes dents 65 sur le même cercle centré sur l'axe de rotation AXROT.

Le système de rappel élastique 70 est ainsi configuré pour pousser le coupleur 40 dans une position de couplage POSCOUP prédéterminée permettant à la liaison à crabot 50 de transmettre un couple moteur uniquement du coupleur 40 vers le premier arbre 25.

Un tel système de rappel élastique 70 peut comprendre un ressort 71 par exemple, ou un équivalent.

Selon l'exemple illustré sur la figure 1, le ressort 71 peut comprendre une spire en contact contre ou fixée à un disque interne 57 solidaire de l'arbre intermédiaire 55, et une spire en contact contre ou fixée à un disque de liaison 73. Le disque de liaison 73 peut être solidaire en translation parallèlement à l'axe de rotation AXROT du deuxième arbre 30. Par exemple, le disque de liaison 73 est formé par un épaulement d'une tige de blocage 72 passant au travers du ressort 71. La tige de blocage 72 peut être munie d'une extrémité de fixation 75 traversant un disque de fixation 32 solidaire du deuxième arbre 30. Un écrou 74 peut être vissé à l'extrémité de fixation 75 pour être plaqué contre le disque de fixation 32.

Selon un autre aspect, le dispositif de liaison 20 peut comporter un actionneur 80 configuré pour déplacer le coupleur 40 en translation parallèlement à l'axe de rotation AXROT de la position de couplage POSCOUP à une position de découplage POSDECOUP prédéterminée inhibant la liaison à crabot 50, et inversement. Dans la position de découplage POSDECOUP, les premières dents 60 et les deuxièmes dents 65 ne sont plus présentes sur un même cercle centré sur l'axe de rotation AXROT.

L'actionneur 80 peut être piloté par un contrôleur 82, un tel contrôleur 82 pouvant comprendre une interface homme-machine et/ou un calculateur autonome éventuellement lié aux senseurs précités de surveillance du système. Par exemple, un tel calculateur est configuré pour transmettre un signal à l'actionneur afin de placer la liaison à crabot 50 dans la position de découplage POSDECOUP en présence d'un blocage ou d'un court-circuit de la machine électrique ou durant le mode moteur.

L'actionneur 80 illustré est un actionneur hydraulique comprenant un réseau hydraulique usuel non représenté et à la portée de l'homme du métier. Alternativement, l'actionneur 80 peut être un vérin électrique ou pneumatique par exemple.

Les figures 3 à 5 illustrent le fonctionnement d'un dispositif de liaison 20 selon l'invention et un exemple d'agencement au sein d'un système de transmission 3.

Ce système de transmission 3 est muni d'un dispositif mécanique 4 connecté à une installation motrice 6.

L'installation motrice 6 comprend la machine électrique 9 pouvant fonctionner dans un mode moteur pour mettre en mouvement le dispositif mécanique 4 et dans un mode générateur électrique en étant mise en mouvement par le dispositif mécanique 4.

La machine électrique 9 est connectée cinématiquement au dispositif mécanique 4 par un dispositif de liaison 20. En particulier, le premier arbre 25 est relié cinématiquement à la machine électrique 9, et le deuxième arbre 30 est relié cinématiquement au dispositif mécanique 4.

Eventuellement, l'installation motrice 6 comporte au moins un moteur thermique 7 connecté de manière usuelle au dispositif mécanique 4, possiblement via une roue libre 8.

Le système de transmission 3 peut être agencé au sein d'un aéronef 1. En particulier, le dispositif mécanique 4 peut comporter une boîte de transmission de puissance 5 mettant en mouvement au moins un rotor 2 de sustentation et/ou de propulsion. La boîte de transmission de puissance 5 peut alors être connectée au deuxième arbre 30, voire au moteur thermique 7.

La figure 3 illustre en particulier un dispositif de liaison 20 dépourvu d'actionneur.

Durant le mode moteur, la machine électrique 9 met en mouvement le premier arbre 25 en rotation autour de l'axe de rotation AXROT. Le dispositif de liaison 20 transmet une puissance mécanique du premier arbre 25 vers le deuxième arbre 30, en rotation selon le sens de rotation 96, via uniquement la roue libre 35 selon les flèches en pointillés. Le jeu 95 empêche une transmission de puissance par le coupleur 40. En outre, le deuxième arbre 30 participe à la mise en mouvement de la boîte de transmission de puissance 5, conjointement ou non avec le moteur thermique 7. En cas de blocage de la machine électrique 9, une rupture de la section fusible peut intervenir et désolidariser la machine électrique 9 du dispositif mécanique.

Durant le mode générateur électrique, le deuxième arbre 30 est mis en rotation par le dispositif mécanique 4. Selon l'exemple illustré, la boîte de transmission de puissance 5 est mise en mouvement par le moteur thermique 7 et entraîne la rotation autour de l'axe de rotation AXROT du deuxième arbre 30. Le dispositif de liaison 20 transmet une puissance mécanique du deuxième arbre 30 vers le premier arbre 25 via uniquement le coupleur 40 selon les flèches en traits pleins. Le premier arbre 25 entraîne alors en rotation l'arbre d'entrée/sortie 10 de la machine électrique 9.

En cas de blocage de la machine électrique 9, la section fusible 45 peut rompre pour ne pas bloquer le dispositif mécanique 4. L'utilisation d'un chemin de transmission de puissance différent que dans le cadre du mode moteur permet la mise en place d'une telle section fusible 45.

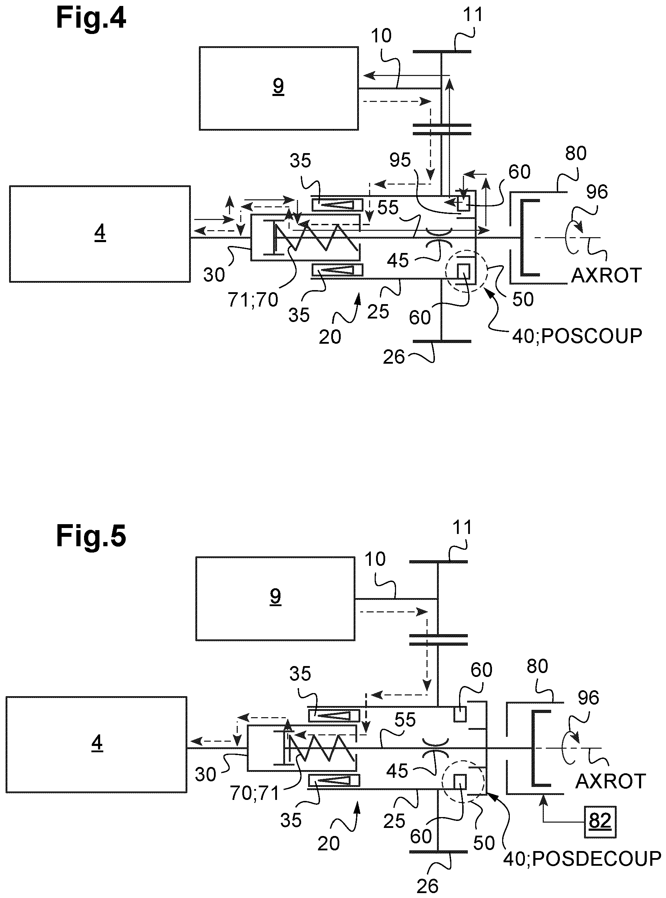

Les figures 4 et 5 illustrent une variante du dispositif de liaison 20 de la figure 3 munie d'un actionneur 80.

En référence à la figure 4, l'actionneur 80 peut positionner le coupleur 40 dans une position de couplage POSCOUP. Le dispositif de liaison 20 fonctionne alors de la même manière que sur la figure 3.

Sur ordre d'une commande 82, l'actionneur 80 peut positionner le coupleur 40 dans une position de découplage POSDECOUP illustré sur la figure 5. Le coupleur 40 est déplacé en translation parallèlement à l'axe de rotation AXROT pour inhiber la liaison à crabot 50. Le système de rappel élastique 70 est comprimé. Le mode générateur électrique est alors interdit par sécurité.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention et notamment des revendications.

## Revendications

1. Système de transmission (3) muni d'un dispositif mécanique (4) connecté à une installation motrice (6), ladite installation motrice (6) comprenant une machine électrique (9) pouvant fonctionner dans un mode moteur pour mettre en mouvement le dispositif mécanique (4) et dans un mode générateur électrique en étant mise en mouvement par le dispositif mécanique (4), la machine électrique (9) étant connectée cinématiquement au dispositif mécanique (4) par un dispositif de liaison (20) bidirectionnel, le dispositif de liaison (20) comprenant un premier arbre (25) relié cinématiquement à la machine électrique (9) et un deuxième arbre (30) relié cinématiquement au dispositif mécanique (4), le deuxième arbre (30) étant mobile en rotation autour d'un axe de rotation (AXROT) selon un sens de rotation (96), le dispositif de liaison (20) comprenant une roue libre (35) interposée entre le premier arbre (25) et le deuxième arbre (30) pour uniquement transmettre un couple moteur du premier arbre (25) vers le deuxième arbre (30) lors du mode moteur,
**caractérisé en ce que** le dispositif de liaison (20) bidirectionnel comprend un coupleur (40) muni d'une section fusible (45), le coupleur (40) étant solidaire du deuxième arbre (30) en rotation autour dudit axe de rotation (AXROT), le dispositif de liaison (20) comprenant une liaison à crabot (50) pouvant uniquement transmettre un couple moteur du coupleur (40) vers le premier arbre (25) lors du mode générateur électrique.

2. Système de transmission selon la revendication 1,
**caractérisé en ce que** le coupleur (40) comprend un arbre intermédiaire (55) muni de ladite section fusible (45) et solidaire du deuxième arbre (30) en rotation autour de l'axe de rotation (AXROT), ledit arbre intermédiaire (55) étant relié au premier arbre (25) par la liaison à crabot (50), la liaison à crabot (50) présentant au moins un jeu (95) non nul en rotation autour de l'axe de rotation (AXROT) selon le sens de rotation (96).

3. Système de transmission selon la revendication 2,
**caractérisé en ce que** ladite liaison à crabot (50) comporte plusieurs premières dents (60) qui sont solidaires du premier arbre (25) en rotation autour de l'axe de rotation (AXROT) et plusieurs deuxièmes dents (65) qui sont solidaires de l'arbre intermédiaire (55) en rotation autour de l'axe de rotation (AXROT), chaque deuxième dent (65) étant agencée sur un arc de cercle centré sur l'axe de rotation (AXROT) entre une première dent amont (601) et une première dent aval (602) et étant séparée de la première dent amont (601) par un dit jeu (95) ; la première dent amont (601) étant en amont de la première dent aval (602) au regard d'un observateur (97) lors d'une rotation selon le sens de rotation autour de l'axe de rotation (AXROT) du premier arbre (25).

4. Système de transmission selon l'une quelconque des revendications 2 à 3,
**caractérisé en ce que** ledit arbre intermédiaire (55) comporte des premières cannelures (36) engrenant des deuxièmes cannelures (56) du deuxième arbre (30).

5. Système de transmission selon l'une quelconque des revendications 2 à 4,
**caractérisé en ce que** ledit dispositif de liaison (20) comporte un système de rappel élastique (70) interposé entre l'arbre intermédiaire (55) et le deuxième arbre (30), le système de rappel élastique (70) poussant le coupleur (40) dans une position de couplage (POSCOUP) prédéterminée permettant à la liaison à crabot (50) de transmettre un couple moteur uniquement du coupleur (40) vers le premier arbre (25).

6. Système de transmission selon l'une quelconque des revendications 1 à 5,
**caractérisé en ce que** ledit dispositif de liaison (20) comporte un actionneur (80) configuré pour déplacer le coupleur (40) en translation d'une position de couplage (POSCOUP) prédéterminée permettant à la liaison à crabot (50) de transmettre un couple moteur du coupleur (40) vers le premier arbre (25) à une position de découplage (POSDECOUP) prédéterminée inhibant la liaison à crabot (50).

7. Système de transmission selon l'une quelconque des revendications 1 à 6,
**caractérisé en ce que** ladite installation motrice (6) comporte au moins un moteur thermique (7) relié cinématiquement au dispositif mécanique (4).

8. Aéronef (1),
**caractérisé en ce que** ledit aéronef (1) comporte un système de transmission (3) selon l'une quelconque des revendications 1 à 7.

9. Aéronef selon la revendication 8,
**caractérisé en ce que** ledit dispositif mécanique (4) comporte une boîte de transmission de puissance (5), la boîte de transmission de puissance (5) mettant en mouvement au moins un rotor (2) de sustentation et/ou de propulsion.
